# EUROPEAN PATENT SPECIFICATION

(11) **EP 3 398 017 B1**
(45) Date of publication and mention of the grant of the patent: **18.09.2019**
(21) Application number: 16822725.4
(22) Date of filing: 22.12.2016
(51) Int. Cl.: G03H 1/00, G03H 1/22, H01P 3/12

(54) **DYNAMIC HOLOGRAPHY SYSTEM FOR ELECTROMAGNETIC WAVE PROPAGATION**
DYNAMISCHES HOLOGRAFISCHES SYSTEM ZUR AUSBREITUNG ELEKTROMAGNETISCHER WELLEN
SYSTÈME D'HOLOGRAPHIE DYNAMIQUE POUR PROPAGATION D'ONDE ÉLECTROMAGNÉTIQUE

(30) Priority: 31.12.2015 US 201562273717 P
(43) Date of publication of application: 07.11.2018
(73) Proprietor: Dualitas Ltd., Milton Keynes MK5 8PG (GB)
(72) Inventor: MULLINS, Brian, Los Angeles California CA 90017 (US)
(74) Representative: Greenaway, Martin William
(86) International application number: PCT/GB2016/054039
(87) International publication number: WO 2017/115075

(56) References cited:
- US-A- 3 404 403
- US-A- 6 008 914
- US-A1- 2009 147 330

## Description

### FIELD

The present disclosure relates to a device and method. More specifically, the present disclosure relates to a plasma waveguide and a method of guiding an EM wave or signal using plasma. Yet more specifically, the present disclosure relates to a dynamically-reconfigurable plasma waveguide, a method of guiding an EM wave or signal using holographically-generated plasma and a method of forming a laser-induced plasma channel using a computer-generated hologram.

### BACKGROUND

A plasma can be created by heating a gas or subjecting it to a strong electromagnetic field applied with a laser or microwave generator. Very high temperature is usually needed to sustain ionization in the plasma. The presence of a significant number of charge carriers makes plasma electrically conductive so that it responds strongly to electromagnetic fields. Similar to gas, plasma does not have a definite shape or a definite volume unless enclosed in a container. However unlike gas, under the influence of a magnetic field, plasma may be formed into structures such as a beam. However, the application of the electromagnetic fields may not be precise enough to form the plasma into a specific structure pattern with higher degree of accuracy.

There is described herein apparatus, methods and systems for forming plasma using a holographic projection system and guiding an EM signal using the plasma.

Light scattered from an object contains both amplitude and phase information. This amplitude and phase information can be captured on, for example, a photosensitive plate by well-known interference techniques to form a holographic recording, or "hologram", comprising interference fringes. The hologram may be reconstructed by illumination with suitable light to form a two-dimensional or three-dimensional holographic reconstruction, or replay image, representative of the original object.

Computer-generated holography may numerically simulate the interference process. A computer-generated hologram, "CGH", may be calculated by a technique based on a mathematical transformation such as a Fresnel or Fourier transform. These types of holograms may be referred to as Fresnel or Fourier holograms. A Fourier hologram may be considered a Fourier domain representation of the object or a frequency domain representation of the object. A CGH may also be calculated by coherent ray tracing or a point cloud technique, for example.

A CGH may be encoded on a spatial light modulator, "SLM", arranged to modulate the amplitude and/or phase of incident light. Light modulation may be achieved using electrically-addressable liquid crystals, optically-addressable liquid crystals or micro-mirrors, for example.

The SLM may comprise a plurality of individually-addressable pixels which may also be referred to as cells or elements. The light modulation scheme may be binary, multilevel or continuous. Alternatively, the device may be continuous (i.e. is not comprised of pixels) and light modulation may therefore be continuous across the device. The SLM may be reflective meaning that modulated light is output from the SLM in reflection. The SLM may equally be transmissive meaning that modulated light is output from the SLM is transmission.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 a block diagram illustrating an example of a plasma device in accordance with one example embodiment.
FIG. 2 a block diagram illustrating another example of a plasma device in accordance with one example embodiment.
FIG. 3 a block diagram illustrating an example of a plasma device in accordance with another example embodiment.
FIG. 4 is a diagram illustrating a cross-section of an example of a LCOS-SLM (Liquid Crystal on Silicon Spatial Light Modulator).
FIG. 5 is a flow diagram illustrating one example operation of a plasma device, in accordance with an example embodiment.
FIG. 6 is a flow diagram illustrating another example operation of a plasma device, in accordance with an example embodiment.
FIG. 7 illustrates an aspect of the subject matter in accordance with one embodiment.
FIG. 8 a block diagram illustrating components of a machine, according to some example embodiments, able to read instructions from a machine-readable medium and perform any one or more of the methodologies discussed herein.

### SUMMARY

Example methods and systems are directed to a dynamic holography device for propagating electromagnetic signals through a plasma generated by the dynamic holography device. Examples merely typify possible variations. Unless explicitly stated otherwise, structures (e.g., structural components, such as modules) are optional and may be combined or subdivided, and operations (e.g., in a procedure, algorithm, or other function) may vary in sequence or be combined or subdivided. In the following description, for purposes of explanation, numerous specific details are set forth to provide a thorough understanding of example embodiments. It will be evident to one skilled in the art, however, that the present subject matter may be practiced without these specific details.

The invention is set out in the appended set of claims.

Any embodiment which does not fall within the scope of the claims does not form part of the invention, but rather represent background art (illustrative example) that is useful for understanding the invention.

In the following description, although numerous features are introduced by "may" or "can", it is nevertheless acknowledged that all features comprised in the independent claims are not to be read as optional.

Dynamic holographic wavefronts can be generated and manipulated via the phase and amplitude modulation of a high energy laser such that the constructive interference of the laser light can be controlled precisely and across a three-dimensional spatial area. With sufficient energy, these constructive and destructive interference points have enough energy to generate plasma in the air via the ionization of gases.

By using a high powered laser and holographic wavefront techniques, the constructive interference at the laser wavefronts can be controlled in order to focus the modulated light in a three-dimensional space to such a degree that the air at the constructive interference points becomes plasma. This plasma channel can be used for a multitude of purposes. In one example embodiment, the plasma channel can be used to steer, guide, and propagate EM signals allowing for a secure, contactless, dynamic signal transmission. Furthermore, the presently described technique allows for the ability to dynamically change the plasma channel's location, shape, size, and intensity in response to spatial and power constraints.

The device uses a laser light that is diffracted (and, optionally, reflected) through a holographic spatial light modulator (e.g. a LCOS-SLM (Liquid Crystal on Silicon Spatial Light Modulator) system). LCOS-SLM (Liquid Crystal on Silicon Spatial Light Modulator) is used to modulate a laser light by changing or shifting the phase and/or amplitude of the laser light to generate a holographic wavefront (that is, a wavefront which reconstructs in space to form a holographic reconstruction or holographic image). The phase and/or amplitude of the light is modulated in such a manner that a holographic wavefront can be generated, optionally, forming multiple focal points or just a single focal point in space. The phase of the modulated light may be controlled in such a manner to form a holographic image having any configuration. That is, the LCOS-SLM redistributes the received optical energy in accordance with the LCOS-SLM control signal. As may be understood from the present disclosure, the receive optical energy may be focused to, for example, at least one focal point. Constructive and destructive interference from multiple holographic wavefronts can occur at focal points, leading to a concentration of energy from the laser light. The concentrated energy heats the air at the focal points enough to generate plasma at the focal points. Because the focal points are generated by waveform reconstruction, the pattern and location of the focal points can be very precisely controlled to create complex patterns and shapes. The LCOS-SLM thus allows a user to steer the holographic fields changing the location of the interference pattern.

A device includes a plasma steering application and an electromagnetic (EM) wave application. The plasma steering application generates a laser control signal and a SLM (Spatial Light Modulator) control signal. The EM signal application generates an EM control signal based on a communication data or signal. The laser source generates a plurality of incident laser beams based on the laser control signal. The SLM receives the plurality of incident laser beams, modulates the plurality of incident laser beams based on the SLM control signal, and generates a plurality of holographic wavefronts from the modulated plurality of incident laser beams. Each holographic wavefront has corresponding focal points. Plasma may formed at the interference points of the focal points of the plurality of holographic wavefronts. An EM signal source is disposed on or adjacent to the surface of the SLM and generates an EM signal in response to the EM control signal. The electromagnetic signal forms an EM wave that propagates through the plasma to an EM signal receiver. Such a device may further include a laser source controller coupled to the laser source, with the laser source configured to receive the laser control signal. In some embodiments, the SLM is an LCOS-SLM. The device controls the laser source in response to the laser control signal and/or a LCOS-SLM controller coupled to the LCOS-SLM. The LCOS-SLM controller is configured to receive the LCOS-SLM control signal and to control the LCOS-SLM in response to the LCOS-SLM control signal.

There is therefore provided a device comprising: a hardware processor comprising a plasma steering application and an electromagnetic (EM) wave application, the plasma steering application configured to generate a laser control signal and a SLM (Spatial Light Modulator) control signal, the EM wave application configured to generate an EM control signal based on communication data or signal; a laser source configured to generate a plurality of incident laser beams based on the laser control signal; a SLM configured to receive the plurality of incident laser beams, to modulate the plurality of incident laser beams based on the SLM control signal, and to generate a plurality of holographic wavefronts from the modulated plurality of incident laser beams, each holographic wavefront having corresponding focal points, and to form a plasma at interference points of the focal points of the plurality of holographic wavefronts; and an EM signal source disposed on a surface of the SLM and configured to generate an EM signal in response to the EM control signal, the EM signal forming an EM wave that propagates through the plasma to an EM signal receiver, the EM wave representing the communication data or signal.

There is provided a device comprising: a hardware processor comprising a plasma steering application and an electromagnetic (EM) wave application, the plasma steering application configured to generate a laser control signal and a SLM (Spatial Light Modulator) control signal, the EM wave application configured to generate an EM control signal based on communication data or signal; a laser source configured to generate a plurality of incident laser beams based on the laser control signal; a SLM configured to receive the plurality of incident laser beams, to modulate the plurality of incident laser beams based on the SLM control signal, and to generate a plurality of holographic wavefronts, each holographic wavefront forming at least one corresponding focal point, and to form a plasma at interference points of the focal points of the plurality of holographic wavefronts; and an EM signal source configured to generate an EM signal in response to the EM control signal, the EM signal forming an EM wave that propagates through a laser-induced plasma channel formed by the plasma to an EM signal receiver, the EM wave representing the communication data or signal.

In alternative embodiments, the LCOS-SLM is configured to focus laser light to at least one focal point. Plasma may be formed at the at least one focal point if the power density is sufficiently high. That is, in these embodiments, interference of plural focal points is not required to achieve the required power density.

In some embodiments, the LCOS-SLM is configured to receive first laser light and second laser light. In some embodiments, the first laser light is received on a first plurality of pixels of the SLM and the second laser light is received on a second plurality of pixels of the SLM. In some embodiments, the first laser light and second laser light are received at the same time or substantially the same time. The first plurality of pixels are configured to focus the first laser light to at least one first focal point. The second plurality of pixels are configured to focus the second laser light to at least one second focal point. In some embodiments, the at least one first focal point and the at least one second focal point are substantially coincident. In these embodiments, constructive interference occurs at the focal points and plasma will be formed if the power density is sufficiently high. It may be understood that the pixels of the SLM may be divided into any number of subsets, each subset arranged to receive respective laser light and focus that respective laser light to at least one focal point. In other embodiments, a plurality of SLMs may be used to bring a corresponding plurality of laser light beams to a common focal point or focal points to form plasma.

In some embodiments, the first laser light and second laser light are temporally separated. For example, the first laser light may correspond to a first pulse of light from the laser source and the second laser light may correspond to a second pulse of light from the laser source.

In some embodiments, the plasma steering application identifies a group of predefined spatial locations adjacent to the LCOS-SLM and generates the LCOS-SLM control signal and the laser control signal to adjust a position of the focal points of the modulated group of incident laser beams to correspond with the group of predefined spatial locations. The LCOS-SLM forming the plasma at the interference points formed based on the group of predefined spatial locations.

In some embodiments, the LCOS-SLM is configured to modulate at least a phase or an amplitude of the group of laser light beams to generate the group of holographic wavefronts at the focal points.

In some embodiments, such a device may further include a MEMS device configured to receive the group of incident laser beams from the laser source; a MEMS controller configured to generate a MEMS control signal to the MEMS device, the MEMS device reflecting the group of incident laser beams at a group of locations on the LCOS-SLM based on the MEMS control signal; and/or the LCOS-SLM configured to receive the group of incident laser beams at the group of locations, to modulate the group of incident laser beams at the group of locations, and to generate a second group of holographic wavefronts from the modulated group of incident laser beams at the group of locations.

In some embodiments, each holographic wavefront has a corresponding focal point. The LCOS-SLM forms a plasma at the interference points of the focal points of the second group of holographic wavefronts.

In some embodiments, the modulated laser beams may include a combination of at least a spatially modulated phase-only light and a spatially modulated amplitude-only light.

In some embodiments, the LCOS-SLM is a reflective device. That is, the LCOS-SLM outputs spatially-modulated light in reflection. However, the present disclosure is equally applicable to a transmissive LCOS-SLM.

The term "hologram" is used to refer to the *recording* which contains amplitude and/or phase information about the object. The term "holographic reconstruction" is used to refer to the optical *reconstruction* of the object which is formed by illuminating the hologram. The term "replay field" is used to refer to the *plane* in space where the holographic reconstruction is formed. The terms "image" and "image region" refer to areas of the replay field illuminated by light forming the holographic reconstruction.

Reference is made herein to "holographic wavefronts" with respect to the wavefront of spatially-modulated light formed by the spatial light modulator. The wavefront is described as being holographic because it gives rise to a holographic reconstruction in the replay field. In some embodiments, the holographic wavefront gives rise to a holographic reconstruction through interference at the replay field. In some embodiments, the spatial light modulator applies a spatially-variant phase-delay to the wavefront. Each incident laser beam therefore gives rise to a corresponding holographic wavefront. In some embodiments, the LCOS-SLM is configured to receive a plurality of incident laser beams and output a respective plurality of holographic wavefronts.

Reference is also made herein to each holographic wavefront "forming focal points" with respect to formation of the holographic reconstruction at the replay field. The term "focal points" refers to the presence of concentrations of optical energy in the replay field. For example, each holographic wavefront may concentrate the light into a plurality of relatively small regions in the replay field. The term "focal" therefore merely reflects that the optical energy is concentrated. The term "points" therefore merely reflects that these areas of concentration may be plural and may be relatively small so as to achieve high energy density. For example, a received laser beam may be concentrated, or focused, by the spatial light modulator into a plural of points in the replay field.

With respect to operation of the SLM, the terms "encoding", "writing" or "addressing" are used to describe the process of providing the plurality of pixels of the SLM with a respect plurality of control values which respectively determine the modulation level of each pixel. It may be said that the pixels of the SLM are configured to "display" a light modulation distribution in response to receiving the plurality of control values.

The term "light" is used herein in its broadest sense. The term light may refer to visible light, infrared light and ultraviolet light, and any combination thereof.

Reference is made herein to forming "plasma". More specifically, the present disclosure relates to forming a plasma channel or laser-induced plasma channel or plasma waveguide. Embodiments relate to ionization, forming ions and, more specifically, forming a conductive ion channel. Embodiments relate to increasing the level of ionization or number of ions per unit volume in a target region. Some embodiments relate to selectively allowing conduction in a target region or increasing the conductivity of a target region. More specifically, reference to transmitting an EM wave through plasma relates to transmitting an EM wave through a laser-induced plasma channel.

Some embodiments describe 1D and 2D holographic reconstructions by way of example only. In other embodiments, the holographic reconstruction is a 3D holographic reconstruction. That is, in some embodiments, each computer-generated hologram forms a 3D holographic reconstruction.

Some embodiments refer to a laser by way of example only and the present application is equally applicable to any light sources having sufficient optical energy to form plasma as described.

### DETAILED DESCRIPTION OF DRAWINGS

It has been found that a holographic reconstruction of acceptable quality can be formed from a "hologram" containing only phase information related to the original object. Such a holographic recording may be referred to as a phase-only hologram. Some embodiments relate to phase-only holography by way of example only. That is, in some embodiments, the spatial light modulator applies only a phase-delay distribution to incident light. In some embodiments, the phase delay applied by each pixel is multi-level. That is, each pixel may be set at one of a discrete number of phase levels. The discrete number of phase levels may be selected from a much larger set of phase levels or "palette".

In some embodiments, the computer-generated hologram is a Fourier transform of the object for reconstruction. In these embodiments, it may be said that the hologram is a Fourier domain or frequency domain representation of the object. Some embodiments use a reflective SLM to display a phase-only Fourier hologram and produce a holographic reconstruction at a replay field, for example, a light receiving surface such as a screen or diffuser.

A light source, for example a laser or laser diode, is disposed to illuminate the SLM 112 via a collimating lens. The collimating lens causes a generally planar wavefront of light to be incident on the SLM. The direction of the wavefront is off-normal (e.g. two or three degrees away from being truly orthogonal to the plane of the transparent layer). In other embodiments, the generally planar wavefront is provided at normal incidence using a beam splitter, for example. In embodiments, the arrangement is such that light from the light source is reflected off a mirrored rear surface of the SLM and interacts with a phase-modulating layer to form an exit wavefront. The exit wavefront is applied to optics including a Fourier transform lens, having its focus at a screen.

The Fourier transform lens receives a beam of phase-modulated light from the SLM and performs a frequency-space transformation to produce a holographic reconstruction at the screen.

Light is incident across the phase-modulating layer (i.e. the array of phase modulating elements) of the SLM. Modulated light exiting the phase-modulating layer is distributed across the replay field. Notably, in this type of holography, each pixel of the hologram contributes to the whole reconstruction. That is, there is *not* a one-to-one correlation between specific points on the replay field and specific phase-modulating elements.

In these embodiments, the position of the holographic reconstruction in space is determined by the dioptric (focusing) power of the Fourier transform lens. In some embodiments, the Fourier transform lens is a physical lens. That is, the Fourier transform lens is an optical Fourier transform lens and the Fourier transform is performed optically. Any lens can act as a Fourier transform lens but the performance of the lens will limit the accuracy of the Fourier transform it performs. The skilled person understands how to use a lens to perform an optical Fourier transform. However, in other embodiments, the Fourier transform is performed computationally by including lensing data in the holographic data. That is, the hologram includes data representative of a lens as well as data representing the image. It is known in the field of computer-generated hologram how to calculate holographic data representative of a lens. The holographic data representative of a lens may be referred to as a software lens. For example, a phase-only holographic lens may be formed by calculating the phase delay caused by each point of the lens owing to its refractive index and spatially-variant optical path length. For example, the optical path length at the centre of a convex lens is greater than the optical path length at the edges of the lens. An amplitude-only holographic lens may be formed by a Fresnel zone plate. It is also known in the art of computer-generated hologram how to combine holographic data representative of a lens with holographic data representative of the object so that a Fourier transform can be performed without the need for a physical Fourier lens. In some embodiments, lensing data is combined with the holographic data by simple vector addition. In some embodiments, a physical lens is used in conjunction with a software lens to perform the Fourier transform. Alternatively, in other embodiments, the Fourier transform lens is omitted altogether such that the holographic reconstruction takes place in the far-field. In further embodiments, the hologram may include grating data - that is, data arranged to perform the function of a grating such as beam steering. Again, It is known in the field of computer-generated hologram how to calculate such holographic data and combine it with holographic data representative of the object. For example, a phase-only holographic grating may be formed by modelling the phase delay caused by each point on the surface of a blazed grating. An amplitude-only holographic grating may be simply superimposed on an amplitude-only hologram representative of an object to provide angular steering of an amplitude-only hologram.

In some embodiments, the hologram is simply a software lens. That is, the software lens is *not* combined with other holographic data such as holographic data representative of an object. In some embodiments, the hologram includes a software lens and software grating arranged to determine the spatial location of light focused by the software lens. It may be understood that the hologram can produce any desired light field. In some embodiments, a plurality of holographically-formed light fields are interfered - for example, constructively interfered - to form plasma. It should therefore be understood that because the spatial light modulator is dynamically reconfigurable with different holograms, the plasma is under software control. There is therefore provided a holographic system for controlling plasma.

A Fourier hologram of a desired 2D image may be calculated in a number of ways, including using algorithms such as the Gerchberg-Saxton algorithm. The Gerchberg-Saxton algorithm may be used to derive phase information in the Fourier domain from amplitude information in the spatial domain (such as a 2D image). That is, phase information related to the object may be "retrieved" from intensity, or amplitude, only information in the spatial domain. Accordingly, a phase-only Fourier transform of the object may be calculated.

In some embodiments, a computer-generated hologram is calculated from amplitude information using the Gerchberg-Saxton algorithm or a variation thereof. The Gerchberg Saxton algorithm considers the phase retrieval problem when intensity cross-sections of a light beam, I_{A}(x, y) and I_{B}(x, y), in the planes A and B respectively, are known and I_{A}(x, y) and I_{B}(x, y) are related by a single Fourier transform. With the given intensity cross-sections, an approximation to the phase distribution in the planes A and B, Ψ_{A}(x, y) and Ψ_{B}(x, y) respectively, is found. The Gerchberg-Saxton algorithm finds solutions to this problem by following an iterative process.

The Gerchberg-Saxton algorithm iteratively applies spatial and spectral constraints while repeatedly transferring a data set (amplitude and phase), representative of I_{A}(_{X}, y) and I_{B}(x, y), between the spatial domain and the Fourier (spectral) domain. The spatial and spectral constraints are I_{A}(x, y) and I_{B}(x, y) respectively. The constraints in either the spatial or spectral domain are imposed upon the amplitude of the data set. The corresponding phase information is retrieved through a series of iterations.

In some embodiments, the hologram is calculated using an algorithm based on the Gerchberg-Saxton algorithm such as described in British patent 2,498,170 or 2,501,112.

In some embodiments, there is provided a real-time engine arranged to receive image data and calculate holograms in real-time using the algorithm. In some embodiments, the image data is a video comprising a sequence of image frames. In other embodiments, the holograms are precalculated, stored in computer memory and recalled as needed for display on a SLM. That is, in some embodiments, there is provided a repository of predetermined holograms.

However, some embodiments relate to Fourier holography and Gerchberg-Saxton type algorithms by way of example only. The present disclosure is equally applicable to Fresnel holography and holograms calculated by other techniques such as those based on point cloud methods.

The present disclosure may be implemented using any one of a number of different types of SLM. The SLM may output spatially modulated light in reflection or transmission. In some embodiments, the SLM is a liquid crystal on silicon LCOS-SLM but the present disclosure is not restricted to this type of SLM.

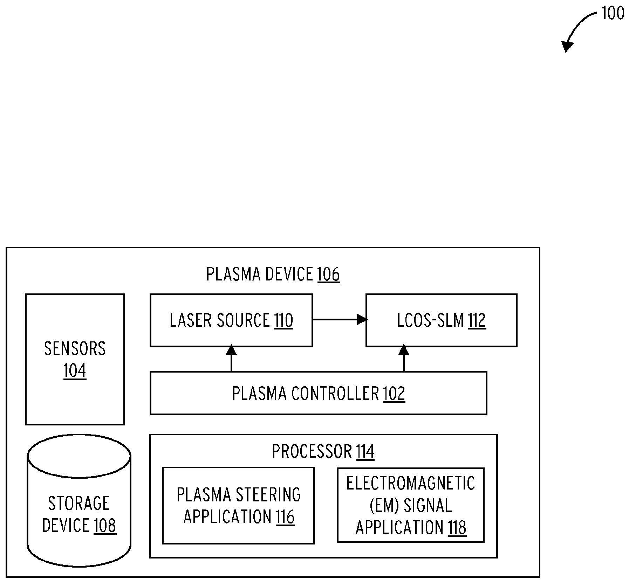

Figure 1 is a block diagram illustrating an example of a plasma device in accordance with one example embodiment. A plasma device 106 includes a laser source 110, an LCOS-SLM 112, a plasma controller 102, a processor 114, sensors 104, and a storage device 108.

The laser source 110 generates a laser beam. The laser source 110 directs the laser beam(s) towards the LCOS-SLM 112. The LCOS-SLM 112 modulates the incident laser beam(s) (e.g., laser light from the laser source 110) based on signal data from the processor 114 to generated reflected light (e.g., modulated laser light). The modulated laser light from the LCOS-SLM 112 forms holographic wavefronts. A plasma is formed at the constructive interference points of the holographic wavefronts. The plasma can be shaped, manipulated, steered by adjusting the modulation of the incident laser beams, the number of incident laser beams, the intensity and direction of the laser beams. That is, the shape of the plasma is controlled by controlling the hologram (or holograms) represented on the spatial light modulator. In some embodiments, the spatial light modulator is configured to provide at least one phase-only lens to bring the received light to at least one corresponding focal point. In some embodiments, the spatial light modulator is configured to provide at least one phase-only lens and at least one corresponding grating to controllably-position the corresponding focused light.

The plasma controller 102 generates a laser control signal to the laser source 110 and an LCOS-SLM 112 control signal to the LCOS-SLM 112 based on the plasma pattern identified by the plasma steering application 116.

The processor 114 includes a plasma steering application 116 to control and steer a plasma and an Electromagnetic (EM) signal application 118 to control an EM signal source. For example, the Electromagnetic (EM) signal application 118 controls the EM signal source disposed on or adjacent to the surface of the LCOS-SLM 112 to generate EM signals in the form of EM waves. The EM waves channels and propagates through the plasma to a remote EM signal receiver.

The plasma steering application 116 identifies a plasma pattern and location relative to a surface of the LCOS-SLM 112 and the EM signal source. The plasma pattern may be user-selected or determined based on data from sensors 104. For example, the plasma steering application 116 may form a continuous plasma channel between the EM signal source and the EM signal receiver.

In one example embodiment, the plasma steering application 116 identifies predefined spatial locations corresponding to the desired plasma pattern and location. The plasma steering application 116 generates the LCOS-SLM control signal and the laser control signal to adjust a position of the focal points of the modulated plurality of incident laser beams to correspond with the predefined spatial locations. The LCOS-SLM 112 forms the plasma at the interference points formed based on the predefined spatial locations.

In another example embodiment, the plasma steering application 116 receives an identification of a spatial location and geometric pattern of the plasma. The plasma steering application 116 identifies a set of focal points corresponding to the identification of the spatial location and geometric pattern of the plasma. The plasma steering application 116 adjusts the laser control signal and the LCOS-SLM control signal based on the set of focal points. Plasma is formed at the interference points based on the set of focal points.

In another example embodiment, the plasma steering application 116 receives an identification of a spatial location and geometric pattern of the plasma and identifies a set of interference points corresponding to the identification of the spatial location and geometric pattern of the plasma. The plasma steering application 116 identifies a second set of focal points based on the set of interference points and adjusts the laser control signal and the LCOS-SLM control signal based on the second plurality of focal points. Plasma is formed at the interference points based on the second set of focal points.

The sensors 104 include, for example, a thermometer, an infrared camera, a barometer, a humidity sensor, an EEG sensor, a proximity or location sensor (e.g., near field communication, GPS, Bluetooth, Wifi), an optical sensor (e.g., camera), an orientation sensor (e.g., gyroscope), an audio sensor (e.g., a microphone), or any suitable combination thereof. It is noted that the sensors described herein are for illustration purposes and the sensors 104 are thus not limited to the ones described.

The storage device 108 stores an identification of the sensors and their respective functions. The storage device 108 further includes a database of visual references (e.g., images, visual identifiers, features of images) and corresponding plasma geometric shape and patterns (e.g., sphere, beam, cube).

In one embodiment, the plasma device 106 may communicate over a computer network with a server to retrieve a portion of a database of visual references. The computer network may be any network that enables communication between or among machines, databases, and devices (e.g., the plasma device 106). Accordingly, the computer network may be a wired network, a wireless network (e.g., a mobile or cellular network), or any suitable combination thereof. The computer network may include one or more portions that constitute a private network, a public network (e.g., the Internet), or any suitable combination thereof.

Any one or more of the modules described herein may be implemented using hardware (e.g., a processor of a machine) or a combination of hardware and software. For example, any module described herein may configure a processor to perform the operations described herein for that module. Moreover, any two or more of these modules may be combined into a single module, and the functions described herein for a single module may be subdivided among multiple modules. Furthermore, according to various example embodiments, modules described herein as being implemented within a single machine, database, or device may be distributed across multiple machines, databases, or devices.

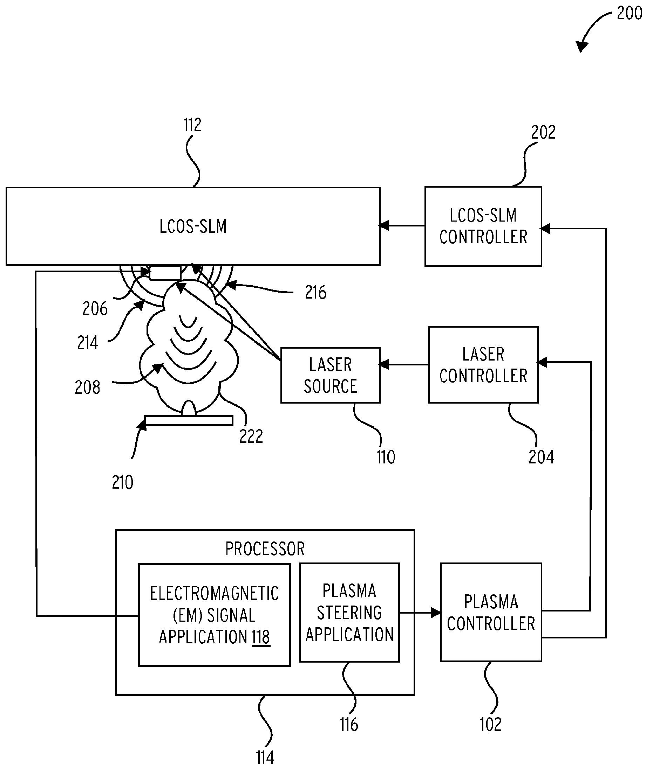

Figure 2 is a block diagram illustrating another example of a plasma device in accordance with one example embodiment. The plasma device 106 includes the LCOS-SLM 112, an LCOS-SLM controller 202, the laser source 110, a laser controller 204, the plasma controller 102, an EM signal source 206, and the processor 114, including the plasma steering application 116 and the Electromagnetic (EM) signal application 118.

The plasma steering application 116 identifies a plasma pattern and computes the location and patterns of the interference points of holographic waves to form the plasma pattern that connects the EM signal source 206 to a remote EM signal receiver 210 (which is, in example embodiments, not part of the plasma device 106). The plasma steering application 116 communicates the location and patterns of the interference points to the plasma controller 102. In another example embodiment, the plasma steering application 116 computes the locations and patterns of the interference points and generate a laser control signal and a LCOS-SLM control signal to the plasma controller 102 based on the computed locations and patterns of the interference points.

The plasma controller 102 sends the laser control signal to the laser controller 204. The plasma controller 102 also sends the LCOS-SLM control signal to the plasma controller 102. The laser controller 204 generates and communicates the laser control signal to control an intensity, a number of beams, and a beam direction of the laser source 110. The LCOS-SLM controller 202 generates and communicates the LCOS-SLM control signal to direct the LCOS-SLM 112 to modulate the laser light from the laser source 110.

Figure 2 illustrates the laser source 110 that produces a first incident laser beam and a second incident laser beam directed at the LCOS-SLM 112. The LCOS-SLM 112 modulates the first incident laser beam into a first set of holographic light field 214 (e.g., a first holographic wavefront) and the second incident laser beam into a second holographic wavefront second set of holographic light field 216 (e.g., a second holographic wavefront). The constructive interference between the first set of holographic light field 214 and the second set of holographic light field 216 forms plasma 222. The shape and location of plasma 222 can be controlled and steered by adjusting the control signals to the laser controller 204 and the LCOS-SLM controller 202.

The Electromagnetic (EM) signal application 118 sends a control signal to the EM signal source 206 to generate EM signal 208. The EM signal 208 propagates through the plasma 222 from the EM signal source 206 to the EM signal receiver 210. In some embodiments, the EM signal 208 is directional and the EM signal source 206 is arranged to direct the EM signal 208 to the plasma. In some embodiments, the EM signal source 206 is disposed on a surface of the SLM. The person skilled in the art of plasma waveguides knows how to couple an EM wave into and out of a plasma waveguide. A full description is not therefore required here. The person skilled in the art of plasma waveguides also knows how to form an effective plasma waveguide. The person skilled in the art will therefore be able to use the holographic concepts described herein to achieve an effective plasma waveguide by experimentation. For example, the person skilled in the art will be able to determine the required plurality of holograms. In some embodiments, each hologram comprises a software lens, as described herein. It may be understood that the required holographic patterns and holographic wavefronts, in accordance with the present disclosure, may be determined based on the requirements for the plasma. It may also be understood that the required plasma properties may be determined by properties of the EM wave to be propagated, or vice versa. In summary, the present disclosure provides dynamically reconfigurable plasma which may be used to form a dynamically reconfigurable waveguide (or laser-induced plasma channel) for an EM wave. For example, the EM wave may be guided to different locations by reconfiguring - e.g. reshaping - the plasma. In some embodiments, the EM wave is modulated with data such as communications data.

The EM signal receiver 210 may be a combination of a surface with a contact point, a second plasma wave emitting device with a contact point, or an arbitrary conductive object.

The plasma steering application 116 can tune the holographic light fields shape and location to steer the plasma 222 and channel the EM signal 208 from the EM signal source 206 to the EM signal receiver 210. Thus, the plasma 222 can be used as a waveguide and transmit EM signals more effectively and dynamically depending on environmental constraints.

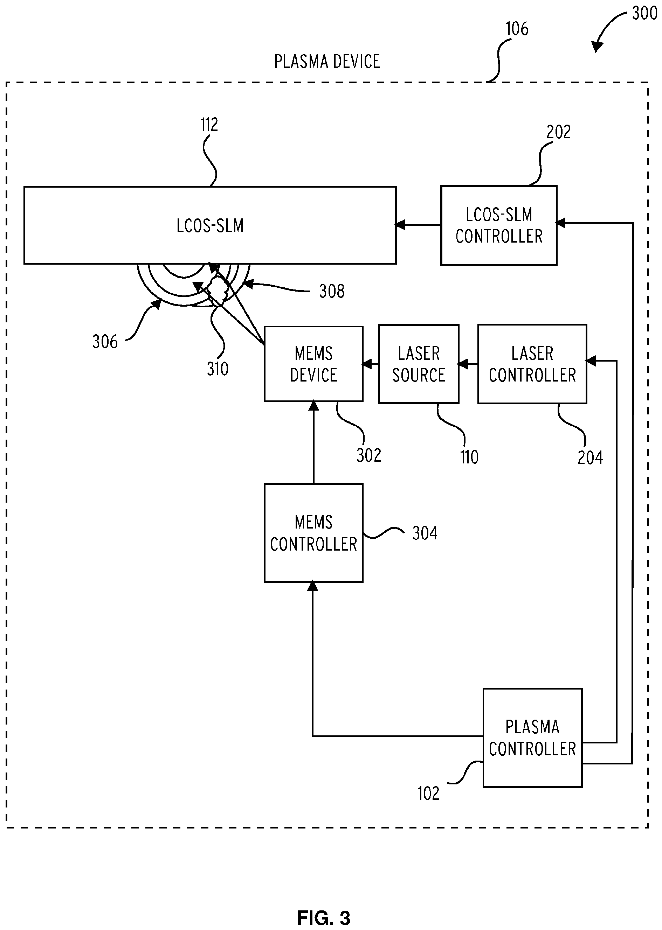

Figure 3 is a block diagram illustrating one example of a plasma device in accordance with another example embodiment. The plasma device 106 includes the LCOS-SLM 112, the LCOS-SLM controller 202, the laser source 110, the plasma laser controller 204, a MEMS device 302, a MEMS controller 304, and the laser controller 204.

The plasma steering application 116 identifies a plasma pattern and computes the location and patterns of the interference points of holographic waves to form the plasma pattern. The plasma steering application 116 communicates the location and patterns of the interference points to the plasma controller 102.

The plasma controller 102 sends the laser control signal to the laser controller 204. The plasma controller 102 also sends the LCOS-SLM control signal to the plasma controller 102. In one example embodiment, the plasma controller 102 sends a MEMS control signal to the MEMS controller 304.

The MEMS controller 304 communicates the MEMS control signal to the MEMS device 302 to control a direction of a laser beam from the laser source 110. In one example embodiment, the MEMS controller 304 generates a synchronization signal to both the laser source 110 and the MEMS device 302. The synchronization signal enables the MEMS device 302 to operate and reflect corresponding individual light beams from the laser source 110.

The MEMS device 302 receives one or more laser beam from the laser source 110 and reflects corresponding individual light beams to the LCOS-SLM 112. The MEMS device 302 reflects the light beams based on the synchronization signal from the MEMS controller 304 or plasma controller 102 to guide the corresponding individual light beams to the corresponding locations on the LCOS-SLM 112. The MEMS device 302 includes, for example, one or more mirrors. The position and orientation of the mirrors is controlled and adjusted based on the synchronization signal received from the MEMS controller 304.

In other embodiments, the MEMS device 302 is instead a second SLM device configured to direct the laser beams using a hologram - e. g. a grating - as described herein.

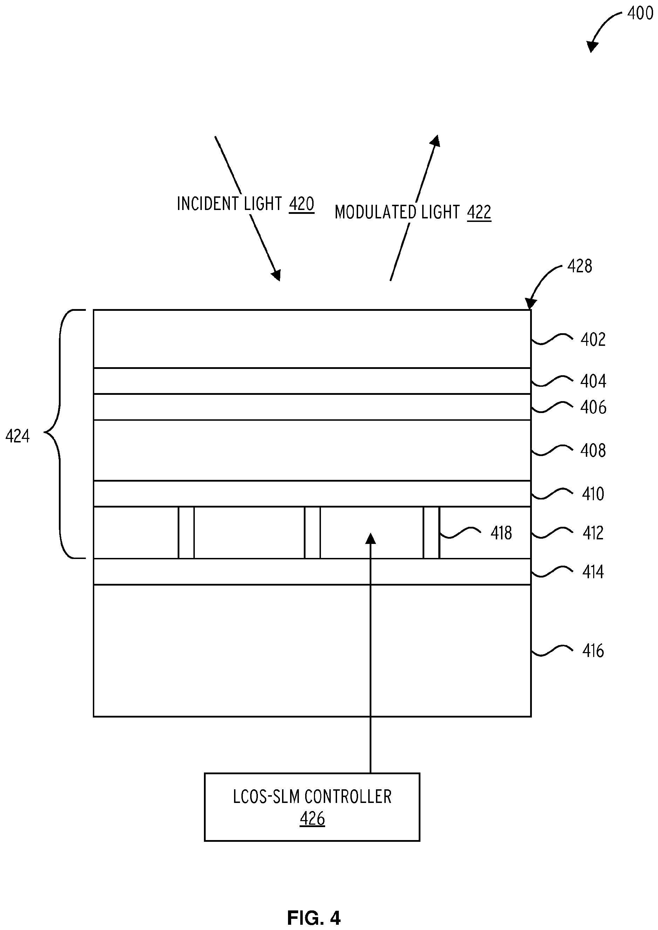

Figure 4 is a diagram illustrating a cross-section of an example of a LCOS-SLM (Liquid Crystal on Silicon Spatial Light Modulator). An LCOS-SLM 428 is formed using a single crystal silicon substrate 416. The substrate 416 consists of a two-dimensional array of square planar aluminium electrodes 412, spaced apart by a gap 418, arranged on the upper surface of the substrate 416. The electrodes 412 are connected to the substrate 416 via a circuit 414 buried in the substrate 416. Each electrode 612 forms a respective planar mirror. The electrodes 412 may be connected to the LCOS-SLM controller 426. In other words, the electrodes 412 receive a control signal from the LCOS-SLM controller 426.

An alignment layer 410 is disposed on top of the two-dimensional array of electrodes 412 and a liquid crystal layer 408 is disposed on the alignment layer 410.

A second alignment layer 406 is disposed on top of the liquid crystal layer 408. A planar transparent layer 402 (e.g. made of glass) is disposed on the top of the second alignment layer 406. A single transparent electrode 404 is disposed between the planar transparent layer 402 and the second alignment layer 406.

Each of the square electrodes 412 defines, together with the overlying region of the transparent electrode 404 and the intervening liquid crystal layer 408, a controllable phase-modulating element 424 (also referred to as a pixel). The effective pixel area, or fill factor, is the percentage of the total pixel which is optically active, taking into account the space or gap 418 between pixels. By controlling the voltage applied to each electrode 412 with respect to the transparent electrode 404, the properties of the liquid crystal material (in the liquid crystal layer 408) of the respective phase modulating element may be varied. The variation of the phase modulating element provides a variable delay to incident light 420. The effect is to provide phase-only modulation to the wavefront (i.e., no amplitude effect occurs in the resulting modulated light 422).

One advantage of using a reflective LCOS spatial light modulator is that the liquid crystal layer can be half the thickness than would be necessary if a transmissive device were used. This greatly improves the switching speed of the liquid crystal (a key point for projection of moving video images). Another advantage is that a LCOS device is also capable of displaying large arrays of phase only elements in a small aperture. Small elements (typically approximately 10 microns or smaller) result in a practical diffraction angle (a few degrees) so that the optical system does not require a very long optical path.

It is easier to adequately illuminate the small aperture (a few square centimeters) of the LCOS-SLM 428 than it would be for the aperture of a larger liquid crystal device. LCOS SLMs also have a large aperture ratio, there being very little dead space between the pixels (because the circuitry to drive them is buried under the mirrors). The small aperture results in lowering the optical noise in the replay field.

Another advantage of using a silicon backplane (e.g., silicon substrate 416) is that the pixels are optically flat, which is important for a phase modulating device.

While embodiments relate to a reflective LCOS SLM, those of ordinary skilled in the art will recognize that other types of SLMs can be used, including transmissive SLMs.

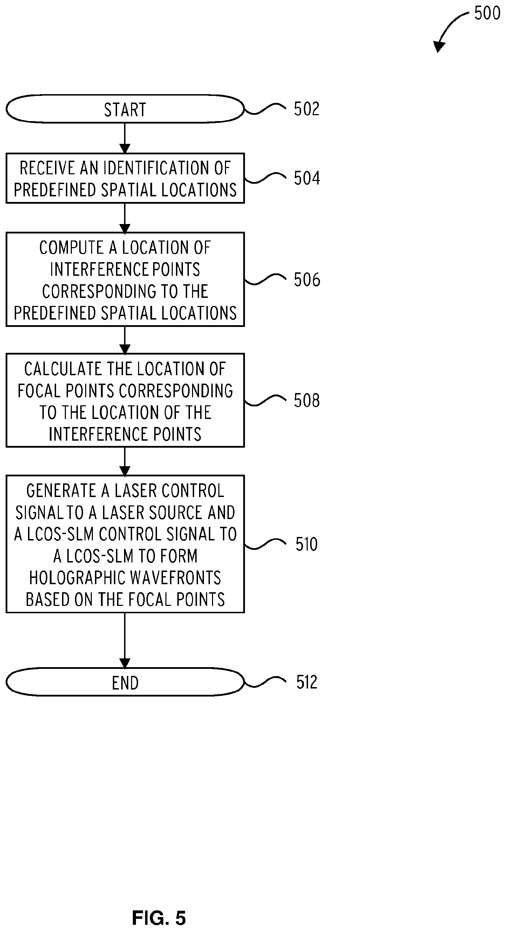

Figure 5 is a flow diagram illustrating one example operation of a plasma device, in accordance with an example embodiment. At block 504, the plasma steering application 116 receives an identification of predefined spatial locations (e.g., desired locations, structure for plasma). At block 506, the plasma steering application 116 computes the location of interference points of holographic wavefronts (to be generated by the LCOS-SLM 112) corresponding to the predefined spatial locations. At block 508, the plasma steering application 116 calculates the location of focal points corresponding to the location of interference points of the holographic wavefronts. At block 510, the plasma steering application 116 generates a laser control signal to the laser source 110 and a LCOS-SLM control signal to the LCOS-SLM 112 to form the holographic wavefronts based on the location of focal points.

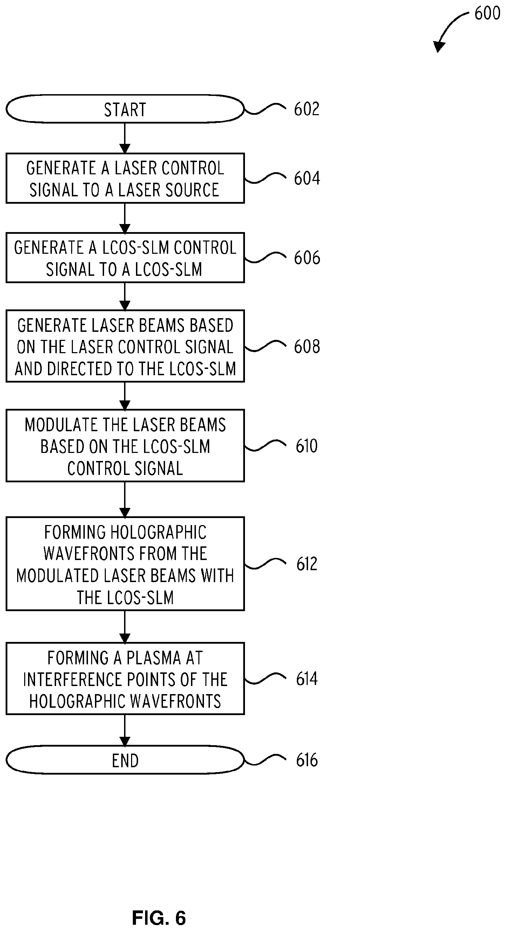

Figure 6 is a flow diagram illustrating another example operation of a plasma device, in accordance with an example embodiment. At block 604, the laser controller 204 generates a laser control signal to the laser source 110 to control an intensity of a laser beam, a direction of a laser beam, and a number of laser beams. At block 606, the LCOS-SLM controller 202 generates a LCOS-SLM control signal to the LCOS-SLM 112 to control a modulation of incident light beams directed on the LCOS-SLM 112. At block 610, the LCOS-SLM 112 modulates the incident laser beams from the laser source 110. At block 612, the LCOS-SLM 112 forms holographic wavefronts from the modulated laser beams. At block 614, plasma is formed at the location of interference points of the holographic wavefronts.

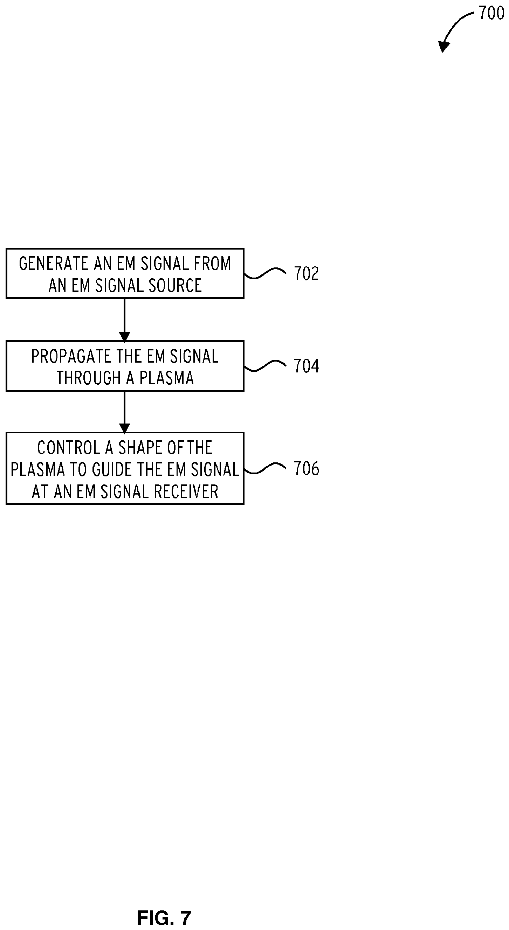

With reference to Figure 7, at block 702, the EM signal source 206 generates an EM signal. At block 704, the EM signal is propagated through the plasma generated by the plasma device 106. At block 706, the plasma device 106 further controls a shape of the plasma and can steer the plasma to guide the EM signal 208 to the EM signal receiver 210.

The presently described technique of propagating EM signals through a plasma steering application 116 allows for a secure, contactless, dynamic signal transmission. Furthermore, the plasma steering application 116 enables a user to dynamically change the plasma channel's location, shape, size, and intensity in addition to changing potential spatial and power constraints.

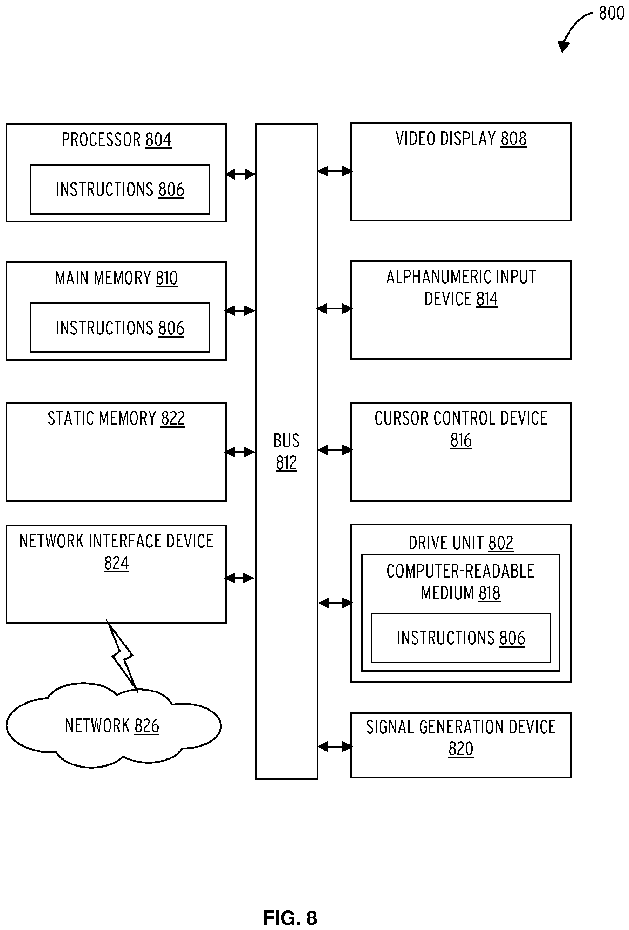

Figure 8 is a block diagram illustrating components of a machine 800, according to some example embodiments, able to read instructions 806 from a computer-readable medium 818 (e.g., a non-transitory machine-readable medium, a machine-readable storage medium, a computer-readable storage medium, or any suitable combination thereof) and perform any one or more of the methodologies discussed herein, in whole or in part. Specifically, the machine 800 in the example form of a computer system (e.g., a computer) within which the instructions 806 (e.g., software, a program, an application, an applet, an app, or other executable code) for causing the machine 800 to perform any one or more of the methodologies discussed herein may be executed, in whole or in part.

In alternative embodiments, the machine 800 operates as a standalone device or may be communicatively coupled (e.g., networked) to other machines. In a networked deployment, the machine 800 may operate in the capacity of a server machine or a client machine in a server-client network environment, or as a peer machine in a distributed (e.g., peer-to-peer) network environment. The machine 800 may be a server computer, a client computer, a personal computer (PC), a tablet computer, a laptop computer, a netbook, a cellular telephone, a smartphone, a set-top box (STB), a personal digital assistant (PDA), a web appliance, a network router, a network switch, a network bridge, or any machine capable of executing the instructions 806, sequentially or otherwise, that specify actions to be taken by that machine. Further, while only a single machine is illustrated, the term "machine" shall also be taken to include any collection of machines that individually or jointly execute the instructions 806 to perform all or part of any one or more of the methodologies discussed herein.

The machine 800 includes a processor 804 (e.g., a central processing unit (CPU), a graphics processing unit (GPU), a digital signal processor (DSP), an application specific integrated circuit (ASIC), a radio-frequency integrated circuit (RFIC), or any suitable combination thereof), a main memory 810, and a static memory 822, which are configured to communicate with each other via a bus 812. The processor 804 contains solid-state digital microcircuits (e.g., electronic, optical, or both) that are configurable, temporarily or permanently, by some or all of the instructions 806 such that the processor 804 is configurable to perform any one or more of the methodologies described herein, in whole or in part. For example, a set of one or more microcircuits of the processor 804 may be configurable to execute one or more modules (e.g., software modules) described herein. In some example embodiments, the processor 804 is a multicore CPU (e.g., a dual-core CPU, a quad-core CPU, or a 128-core CPU) within which each of multiple cores behaves as a separate processor that is able to perform any one or more of the methodologies discussed herein, in whole or in part. Although the beneficial effects described herein may be provided by the machine 800 with at least the processor 804, these same beneficial effects may be provided by a different kind of machine that contains no processors (e.g., a purely mechanical system, a purely hydraulic system, or a hybrid mechanical-hydraulic system), if such a processor-less machine is configured to perform one or more of the methodologies described herein.

The machine 800 may further include a video display 808 (e.g., a plasma display panel (PDP), a light emitting diode (LED) display, a liquid crystal display (LCD), a projector, a cathode ray tube (CRT), or any other display capable of displaying graphics or video). The machine 800 may also include an alphanumeric input device 814 (e.g., a keyboard or keypad), a cursor control device 816 (e.g., a mouse, a touchpad, a trackball, a joystick, a motion sensor, an eye tracking device, or other pointing instrument), a drive unit 802, a signal generation device 820 (e.g., a sound card, an amplifier, a speaker, a headphone jack, or any suitable combination thereof), and a network interface device 824.

The drive unit 802 (e.g., a data storage device) includes the computer-readable medium 818 (e.g., a tangible and non-transitory machine-readable storage medium) on which are stored the instructions 806 embodying any one or more of the methodologies or functions described herein. The instructions 806 may also reside, completely or at least partially, within the main memory 810, within the processor 804 (e.g., within the processor's cache memory), or both, before or during execution thereof by the machine 800. Accordingly, the main memory 810 and the processor 804 may be considered machine-readable media (e.g., tangible and non-transitory machine-readable media). The instructions 806 may be transmitted or received over a computer network via the network interface device 824. For example, the network interface device 824 may communicate the instructions 806 using any one or more transfer protocols (e.g., hypertext transfer protocol (HTTP)).

In some example embodiments, the machine 800 may be a portable computing device (e.g., a smart phone, tablet computer, or a wearable device), and have one or more additional input components (e.g., sensors or gauges). Examples of such input components include an image input component (e.g., one or more cameras), an audio input component (e.g., one or more microphones), a direction input component (e.g., a compass), a location input component (e.g., a global positioning system (GPS) receiver), an orientation component (e.g., a gyroscope), a motion detection component (e.g., one or more accelerometers), an altitude detection component (e.g., an altimeter), a biometric input component (e.g., a heartrate detector or a blood pressure detector), and a gas detection component (e.g., a gas sensor). Input data gathered by any one or more of these input components may be accessible and available for use by any of the modules described herein.

As used herein, the term "memory" refers to a machine-readable medium able to store data temporarily or permanently and may be taken to include, but not be limited to, random-access memory (RAM), read-only memory (ROM), buffer memory, flash memory, and cache memory. While the computer-readable medium 818 is shown in an example embodiment to be a single medium, the term "machine-readable medium" should be taken to include a single medium or multiple media (e.g., a centralized or distributed database, or associated caches and servers) able to store instructions. The term "machine-readable medium" shall also be taken to include any medium, or combination of multiple media, that is capable of storing the instructions 806 for execution by the machine 800, such that the instructions 806, when executed by one or more processors of the machine 800 (e.g., processor 804), cause the machine 800 to perform any one or more of the methodologies described herein, in whole or in part. Accordingly, a "machine-readable medium" refers to a single storage apparatus or device, as well as cloud-based storage systems or storage networks that include multiple storage apparatus or devices. The term "machine-readable medium" shall accordingly be taken to include, but not be limited to, one or more tangible and non-transitory data repositories (e.g., data volumes) in the example form of a solid-state memory chip, an optical disc, a magnetic disc, or any suitable combination thereof. A "non-transitory" machine-readable medium, as used herein, specifically does not include propagating signals per se. In some example embodiments, the instructions 806 for execution by the machine 800 may be communicated by a carrier medium. Examples of such a carrier medium include a storage medium (e.g., a non-transitory machine-readable storage medium, such as a solid-state memory, being physically moved from one place to another place) and a transient medium (e.g., a propagating signal that communicates the instructions 806).

Certain example embodiments are described herein as including modules. Modules may constitute software modules (e.g., code stored or otherwise embodied in a machine-readable medium or in a transmission medium), hardware modules, or any suitable combination thereof. A "hardware module" is a tangible (e.g., non-transitory) physical component (e.g., a set of one or more processors) capable of performing certain operations and may be configured or arranged in a certain physical manner. In various example embodiments, one or more computer systems or one or more hardware modules thereof may be configured by software (e.g., an application or portion thereof) as a hardware module that operates to perform operations described herein for that module.

In some example embodiments, a hardware module may be implemented mechanically, electronically, hydraulically, or any suitable combination thereof. For example, a hardware module may include dedicated circuitry or logic that is permanently configured to perform certain operations. A hardware module may be or include a special-purpose processor, such as a field programmable gate array (FPGA) or an ASIC. A hardware module may also include programmable logic or circuitry that is temporarily configured by software to perform certain operations. As an example, a hardware module may include software encompassed within a CPU or other programmable processor. It will be appreciated that the decision to implement a hardware module mechanically, hydraulically, in dedicated and permanently configured circuitry, or in temporarily configured circuitry (e.g., configured by software) may be driven by cost and time considerations.

Accordingly, the phrase "hardware module" should be understood to encompass a tangible entity that may be physically constructed, permanently configured (e.g., hardwired), or temporarily configured (e.g., programmed) to operate in a certain manner or to perform certain operations described herein. Furthermore, as used herein, the phrase "hardware-implemented module" refers to a hardware module. Considering example embodiments in which hardware modules are temporarily configured (e.g., programmed), each of the hardware modules need not be configured or instantiated at any one instance in time. For example, where a hardware module includes a CPU configured by software to become a special-purpose processor, the CPU may be configured as respectively different special-purpose processors (e.g., each included in a different hardware module) at different times. Software (e.g., a software module) may accordingly configure one or more processors, for example, to become or otherwise constitute a particular hardware module at one instance of time and to become or otherwise constitute a different hardware module at a different instance of time.

Hardware modules can provide information to, and receive information from, other hardware modules. Accordingly, the described hardware modules may be regarded as being communicatively coupled. Where multiple hardware modules exist contemporaneously, communications may be achieved through signal transmission (e.g., over suitable circuits and buses) between or among two or more of the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory (e.g., a memory device) to which it is communicatively coupled. A further hardware module may then, at a later time, access the memory to retrieve and process the stored output. Hardware modules may also initiate communications with input or output devices, and can operate on a resource (e.g., a collection of information from a computing resource).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions described herein. As used herein, "processor-implemented module" refers to a hardware module in which the hardware includes one or more processors. Accordingly, the operations described herein may be at least partially processor-implemented, hardware-implemented, or both, since a processor is an example of hardware, and at least some operations within any one or more of the methods discussed herein may be performed by one or more processor-implemented modules, hardware-implemented modules, or any suitable combination thereof.

Moreover, such one or more processors may perform operations in a "cloud computing" environment or as a service (e.g., within a "software as a service" (SaaS) implementation). For example, at least some operations within any one or more of the methods discussed herein may be performed by a group of computers (e.g., as examples of machines that include processors), with these operations being accessible via a network (e.g., the Internet) and via one or more appropriate interfaces (e.g., an application program interface (API)). The performance of certain operations may be distributed among the one or more processors, whether residing only within a single machine or deployed across a number of machines. In some example embodiments, the one or more processors or hardware modules (e.g., processor-implemented modules) may be located in a single geographic location (e.g., within a home environment, an office environment, or a server farm). In other example embodiments, the one or more processors or hardware modules may be distributed across a number of geographic locations.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and their functionality presented as separate components and functions in example configurations may be implemented as a combined structure or component with combined functions. Similarly, structures and functionality presented as a single component may be implemented as separate components and functions. These and other variations, modifications, additions, and improvements fall within the scope of the subject matter herein.

Some portions of the subject matter discussed herein may be presented in terms of algorithms or symbolic representations of operations on data stored as bits or binary digital signals within a memory (e.g., a computer memory or other machine memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "accessing," "processing," "detecting," "computing," "calculating," "determining," "generating," "presenting," "displaying," or the like refer to actions or processes performable by a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information.
Finally, as used herein, the conjunction "or" refers to a non-exclusive "or," unless specifically stated otherwise.

## Claims

1. A method comprising:
generating a laser control signal to a laser source;
generating an electromagnetic, EM, control signal to an EM signal source, the EM control signal corresponding to a communication data or signal;
generating a spatial light modulator, SLM, control signal to a SLM;
generating one or more incident laser beams with the laser source based on the laser control signal;
modulating, at the SLM, the one or more incident laser beams based on the SLM control signal to generate one or more holographic wavefronts, each holographic wavefront forming at least one corresponding focal point, wherein the one or more incident laser beams have sufficient energy to cause a plasma to form at the focal points of the one or more holographic wavefronts;
generating, at the EM signal source, an EM signal based on the EM control signal, the EM source disposed on a surface of the SLM, the EM signal forming an EM wave that is guided by the plasma to an EM signal receiver, the EM wave representing the communication data or signal.

2. The method of claim 1, further comprising:
providing a plurality of spatial locations adjacent to the SLM; and
generating the SLM control signal and the laser control signal to adjust a position of the focal points of the modulated one or more incident laser beams to correspond with the plurality of spatial locations.

3. The method of claim 1 or 2, further comprising:
modulating the phase of the one or more incident laser beams to generate the one or more holographic wavefronts.

4. The method of any of claims 1 to 3, further comprising:
generating a MEMS control signal to a MEMS device, and prior to modulating, at the SLM, the one or more incident laser beams:
receiving, at the MEMS device, the one or more incident laser beams from the laser source; and
reflecting, at the MEMS device, the one or more incident laser beams to a plurality of locations on the SLM based on the MEMS control signal, the SLM configured to receive the one or more incident laser beams at the plurality of locations.

5. A non-transitory computer-readable storage medium, the computer-readable storage medium including instructions that when executed by a computer, cause the computer to:
generate a laser control signal to a laser source;
generate an EM control signal to an EM signal source, the EM control signal corresponding to a communication data or signal;
generate a SLM control signal to a SLM;
generate one or more incident laser beams with the laser source based on the laser control signal;
modulate, at the SLM, the one or more incident laser beams based on the SLM control signal;
generate one or more holographic wavefronts, each holographic wavefront forming at least one corresponding focal point, wherein the one or more incident laser beams have sufficient energy to cause a plasma to form at the focal points of the one or more holographic wavefronts;
generate, at the EM signal source, an EM signal based on the EM control signal, the EM signal forming an EM wave that is guided by the plasma to an EM signal receiver, the EM wave representing the communication data or signal.

## Patentansprüche

1. Verfahren, umfassend:
Erzeugen eines Lasersteuersignals für eine Laserquelle;
Erzeugen eines elektromagnetischen, EM-, Steuersignals für eine EM-Signalquelle, wobei das EM-Steuersignal Kommunikationsdaten oder einem Kommunikationssignal entspricht;
Erzeugen eines räumlichen Lichtmodulator, SLM-, Steuersignals an einen SLM;
Erzeugen eines oder mehrerer einfallender Laserstrahlen mit der Laserquelle basierend auf dem Lasersteuersignal;
Modulieren der einen oder mehreren einfallenden Laserstrahlen basierend auf dem SLM-Steuersignal am SLM, um eine oder mehrere holographische Wellenfronten zu erzeugen, wobei jede holographische Wellenfront mindestens einen entsprechenden Brennpunkt bildet, wobei der eine oder die mehreren einfallenden Laserstrahlen genügend Energie aufweisen, um ein Plasma an den Brennpunkten der einen oder mehreren holographischen Wellenfronten zu erzeugen;
Erzeugen eines EM-Signals an der EM-Signalquelle basierend auf dem EM-Steuersignal, wobei die EM-Quelle auf einer Oberfläche des SLM angeordnet ist, wobei das EM-Signal eine EM-Welle bildet, die vom Plasma zu einem EM-Signalempfänger geleitet wird, wobei die EM-Welle die Kommunikationsdaten oder das Kommunikationssignal darstellt.

2. Verfahren nach Anspruch 1, weiterhin umfassend:
Bereitstellen einer Vielzahl von räumlichen Positionen angrenzend an den SLM; und
Erzeugen des SLM-Steuersignals und des Lasersteuersignals zum Einstellen einer Position der Brennpunkte des modulierten einen oder mehreren einfallenden Laserstrahlen, um den mehreren räumlichen Positionen zu entsprechen.

3. Verfahren nach Anspruch 1 oder 2, weiterhin umfassend:
Modulieren der Phase eines oder mehrerer einfallender Laserstrahlen, um die eine oder mehrere holographische Wellenfronten zu erzeugen.

4. Verfahren nach einem der Ansprüche 1 bis 3, weiterhin umfassend:
Erzeugen eines MEMS-Steuersignals an eine MEMS-Vorrichtung und vor dem Modulieren der einen oder mehreren einfallenden Laserstrahlen an dem SLM:
Empfangen eines oder mehrerer einfallender Laserstrahlen von der Laserquelle an der MEMS-Vorrichtung; und
Reflektieren, an der MEMS-Vorrichtung, des einen oder der mehreren einfallenden Laserstrahlen zu einer Vielzahl von Positionen auf dem SLM basierend auf dem MEMS-Steuersignal, wobei der SLM konfiguriert ist, um den einen oder die mehreren einfallenden Laserstrahlen an der Vielzahl von Positionen zu empfangen.

5. Nichtflüchtiges, computerlesbares Speichermedium, wobei das computerlesbare Speichermedium Anweisungen enthält, die bei Ausführung durch einen Computer den Computer veranlassen zum:
Erzeugen eines Lasersteuersignals für eine Laserquelle;
Erzeugen eines EM-Steuersignals für eine EM-Signalquelle, wobei das EM-Steuersignal Kommunikationsdaten oder einem Kommunikationssignal entspricht;
Erzeugen eines SLM-Steuersignals für ein SLM;
Erzeugen eines oder mehrerer einfallender Laserstrahlen mit der Laserquelle basierend auf dem Lasersteuersignal;
Modulieren des einen oder der mehreren einfallenden Laserstrahlen am SLM basierend auf dem SLM-Steuersignal;
Erzeugen einer oder mehrerer holographischer Wellenfronten, wobei jede holographische Wellenfront mindestens einen entsprechenden Brennpunkt bildet, wobei der eine oder die mehreren einfallenden Laserstrahlen genügend Energie aufweisen, um ein Plasma an den Brennpunkten der einen oder mehreren holographischen Wellenfronten zu erzeugen;
Erzeugen eines EM-Signals an der EM-Signalquelle basierend auf dem EM-Steuersignal, wobei das EM-Signal eine EM-Welle bildet, die vom Plasma zu einem EM-Signalempfänger geleitet wird, wobei die EM-Welle die Kommunikationsdaten oder das Kommunikationssignal darstellt.

## Revendications

1. Procédé comprenant :
la production d'un signal de commande de laser à destination d'une source laser ;
la production d'un signal de commande électromagnétique, EM, à destination d'une source de signal EM, le signal de commande EM correspondant à un signal ou à des données de communication ;
la production d'un signal de commande de modulateur spatial de lumière, SLM, à destination d'un SLM ;
la production d'un ou plusieurs faisceaux laser incidents avec la source laser sur la base du signal de commande de laser ;
la modulation, au niveau du SLM, du ou des plusieurs faisceaux laser incidents sur la base du signal de commande de SLM pour produire un ou plusieurs fronts d'onde holographiques, chaque front d'onde holographique formant au moins un point focal correspondant, dans lequel les un ou plusieurs faisceaux laser incidents ont une énergie suffisante pour provoquer la formation d'un plasma au niveau des points focaux des un ou plusieurs fronts d'onde holographiques ;
la production, au niveau de la source de signal EM, d'un signal EM sur la base du signal de commande EM, la source EM étant disposée sur une surface du SLM, le signal EM formant une onde EM qui est guidée par le plasma jusqu'à un récepteur de signal EM, l'onde EM représentant le signal ou les données de communication.

2. Procédé selon la revendication 1, comprenant en outre :
la fourniture d'une pluralité d'emplacements spatiaux adjacents au SLM ; et
la production du signal de commande de SLM et du signal de commande de laser pour ajuster une position des points focaux du ou des plusieurs faisceaux laser incidents modulés pour correspondre à la pluralité d'emplacements spatiaux.

3. Procédé selon la revendication 1 ou 2, comprenant en outre :
la modulation de la phase du ou des plusieurs faisceaux laser incidents pour produire le ou les plusieurs fronts d'onde holographiques.

4. Procédé selon l'une quelconque des revendications 1 à 3, comprenant en outre :
la production d'un signal de commande de MEMS à destination d'un dispositif MEMS, et avant la modulation, au niveau du SLM, du ou des plusieurs faisceaux laser incidents ;
la réception, au niveau du dispositif MEMS, du ou des plusieurs faisceaux laser incidents en provenance de la source laser ; et
la réflexion, au niveau du dispositif MEMS, du ou des plusieurs faisceaux laser incidents vers une pluralité d'emplacements sur le SLM sur la base du signal de commande de MEMS, le SLM étant configuré pour recevoir le ou les plusieurs faisceaux laser incidents au niveau de la pluralité d'emplacements.

5. Support de stockage non transitoire lisible par ordinateur, le support de stockage lisible par ordinateur incluant des instructions qui, lorsqu'elles sont exécutées par un ordinateur, amènent l'ordinateur à :
produire un signal de commande de laser à destination d'une source laser ;
produire un signal de commande EM à destination d'une source de signal EM, le signal de commande EM correspondant à un signal ou à des données de communication ;
produire un signal de commande de SLM à destination d'un SLM ;
produire un ou plusieurs faisceaux laser incidents avec la source laser sur la base du signal de commande de laser ;
moduler, au niveau du SLM, le ou les plusieurs faisceaux laser incidents sur la base du signal de commande de SLM ;
produire un ou plusieurs fronts d'onde holographiques, chaque front d'onde holographique formant au moins un point focal correspondant, dans lequel le ou les plusieurs faisceaux laser incidents ont une énergie suffisante pour provoquer la formation d'un plasma au niveau des points focaux du ou des plusieurs fronts d'onde holographiques ;
produire, au niveau de la source de signal EM, un signal EM sur la base du signal de commande EM, le signal EM formant une onde EM qui est guidée par le plasma jusqu'à un récepteur de signal EM, l'onde EM représentant le signal ou les données de communication.
